# EUROPEAN PATENT APPLICATION

(11) **EP 4 749 615 A1**
(43) Date of publication of application: **27.05.2026**
(21) Application number: 25213525.6
(22) Date of filing: 05.11.2025
(51) Int. Cl.: G10L 15/183, G10L 15/19, G10L 15/26, G06F 40/232

(54) **TEXT CONVERSION METHOD FOR VOICE DATA, INFORMATION PROCESSING DEVICE, AND NON-TRANSITORY STORAGE MEDIUM**

(30) Priority: 26.11.2024 JP 2024205811
(71) Applicant: TOYOTA JIDOSHA KABUSHIKI KAISHA, Toyota-shi, Aichi-ken 471-8571 (JP)
(72) Inventor: SUZUKI, Takuma, Toyota-shi, 471-8571 (JP)
(74) Representative: TBK

(57) **Abstract**

A text conversion method for voice data that is executed by an information processing device (10) includes: acquiring voice data; generating text data based on the voice data; and correcting an error pattern included in the text data, based on an error correction table. The error correction table includes a first error pattern, at least one second error pattern generated based on the voice data in which the first error pattern is generated, and a correction pattern corresponding to the first error pattern and the at least one second error pattern.

## Description

### BACKGROUND OF THE INVENTION

### 1. Field of the Invention

The present disclosure relates to a text conversion method for voice data, an information processing device, and a non-transitory storage medium.

### 2. Description of Related Art

A technology for analyzing the content of a business talk is known. For example, Japanese Unexamined Patent Application Publication No. 2019-28910 (JP 2019-28910 A) discloses a dialogue analysis system for checking that a sales person has explained matters that should be explained and has not said matters that should not be said, in a business talk with a customer.

### SUMMARY OF THE INVENTION

In JP 2019-28910 A, a technology for analyzing the content of the business talk by machine learning is shown, but the transcription of the voice in the business talk or the like, that is, a text conversion technology for voice data is not mentioned. Meanwhile, for the analysis, feedback, and others of the content of the business talk or the like, it is desirable to improve the text conversion technology for voice data. Thus, there is room for improvement in the text conversion technology for the voice data in the business talk or the like.

The present disclosure provides a text conversion method for voice data, an information processing device, and a non-transitory storage medium that improve the text conversion technology for voice data.

A text conversion method for voice data according to a first aspect of the present disclosure is executed by an information processing device. The text conversion method for voice data includes acquiring voice data, generating text data based on the voice data, and correcting an error pattern included in the text data, based on an error correction table. The error correction table includes a first error pattern, at least one second error pattern generated based on the voice data in which the first error pattern is generated, and a correction pattern corresponding to the first error pattern and the at least one second error pattern.

In the text conversion method for voice data according to the first aspect of the present disclosure, the at least one second error pattern may be generated based on target data of the voice data in which the first error pattern is generated, the target data being data within a predetermined time range that includes the period of speech of voice corresponding to the first error pattern.

In the text conversion method for voice data according to the first aspect of the present disclosure, the at least one second error pattern may be generated by inputting, to a voice recognition engine, processed data resulting from processing the target data.

In the text conversion method for voice data according to the first aspect of the present disclosure, the processed data may be data resulting from processing the target data by at least one process of a noise addition process, a noise removal process, a frequency change process, and a sound volume change process.

In the text conversion method for voice data according to the first aspect of the present disclosure, the at least one second error pattern may be generated by inputting the target data to a voice recognition engine for which parameter adjustment has been performed.

An information processing device according to a second aspect of the present disclosure includes a controller. The controller is configured to acquire voice data, is configured to generate text data based on the voice data, and is configured to correct an error pattern included in the text data, based on an error correction table. The error correction table includes a first error pattern, at least one second error pattern generated based on the voice data in which the first error pattern is generated, and a correction pattern corresponding to the first error pattern and the at least one second error pattern.

A non-transitory storage medium according to a third aspect of the present disclosure stores instructions that are executable by one or more processors and that cause the one or more processors to perform functions. The functions include acquiring voice data, generating text data based on the voice data, and correcting an error pattern included in the text data, based on an error correction table. The error correction table includes a first error pattern, at least one second error pattern generated based on the voice data in which the first error pattern is generated, and a correction pattern corresponding to the first error pattern and the at least one second error pattern.

With an embodiment of the present disclosure, the text conversion technology for voice data is improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing a schematic configuration of a system according to an embodiment;
FIG. 2 is a flowchart showing the operation of an information processing device; and
FIG. 3 is a flowchart showing the operation of the information processing device.

### DETAILED DESCRIPTION OF EMBODIMENTS

An embodiment of the present disclosure will be described below.

### Overview of Embodiment

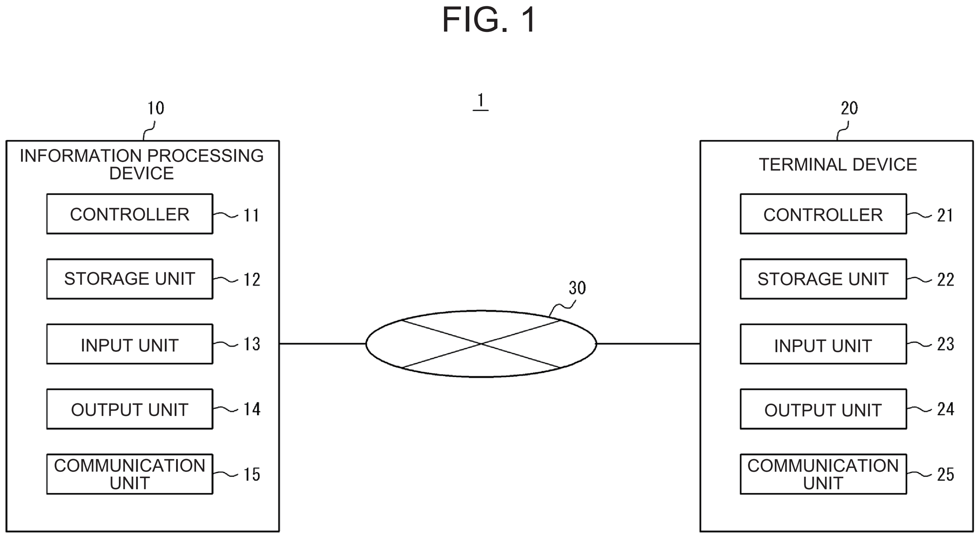

The overview and configuration of a system 1 according to the embodiment will be described with reference to FIG. 1. The system 1 according to the embodiment includes an information processing device 10 and a terminal device 20. The information processing device 10 and the terminal device 20 are communicably connected to a network 30 including a mobile body communication network and the internet, for example.

The information processing device 10 is a server device that is installed in a data center, for example. For example, the information processing device 10 is a server that belongs to a cloud computing system or another computing system. The number of information processing devices 10 included in the system 1 is one as an example shown in FIG. 1, but is not limited to this. The system 1 may include two or more information processing devices 10.

The terminal device 20 is an arbitrary device that is used by a user. For example, a general-purpose electronic apparatus, such as a personal computer, a smartphone, a tablet terminal, and a wearable terminal, or a dedicated electronic apparatus can be employed as the terminal device 20. The number of terminal devices 20 included in the system 1 is one as an example shown in FIG. 1, but is not limited to this. The system 1 may include two or more terminal devices 20.

First, an overview of the text conversion technology for voice data according to the embodiment will be described, and details will be described later. The voice data may be data relevant to a specific domain. For example, the voice data may be data about the voice in a business talk. In the embodiment, for example, the business talk is a business talk relevant to vehicle sales, and a provision object relevant to the business talk is a vehicle, although these examples are not limitative. For example, the business talk may include business talks at meetings for various kinds of contract conclusions, such as the sale and purchase of real estate, the contract of an insurance contract, and the sale of a financial product. Further, the provision object relevant to the business talk in the embodiment may be a product, a service, a digital content, a license, data (information), a financial product, real estate, an intangible asset, another tradable right, or the like.

The information processing device 10 acquires the voice data. Further, the information processing device 10 generates text data based on the voice data. Further, the information processing device 10 corrects a pattern (also referred to as an error pattern hereinafter) of an erroneously written word, a falsely recognized phase, or the like that is included in the text data, based on an error correction table.

The error correction table includes a certain error pattern (also referred to as a first error pattern hereinafter), at least one different error pattern (also referred to as a second error pattern hereinafter) generated based on the voice data in which the first error pattern is generated, and a corrected phase or the like (also referred to as a correction pattern hereinafter) corresponding to the first error pattern and the at least one second error pattern.

In this way, in the embodiment, the information processing device 10 corrects the error pattern included in the text pattern, based on the error correction table. Particularly, the error correction table includes the first error pattern, at least one second error pattern generated based on the voice data in which the first error pattern is generated, and the correction pattern corresponding to the first error pattern and the at least one second error pattern. The error correction table includes a plurality of error patterns in this way, and therefore, there is a high possibility that the text data having an error can be corrected. Moreover, the error patterns are efficiently generated based on the voice data, and therefore, the text conversion technology for voice data is improved.

Next, the configurations of the information processing device 10 and the terminal device 20 will be described in detail.

### Configuration of Information Processing Device 10

As shown in FIG. 1, the information processing device 10 includes a controller 11, a storage unit 12, an input unit 13, an output unit 14, and a communication unit 15.

The controller 11 includes at least one processor, at least one dedicated circuit, or a combination of these. The processor is a general-purpose processor, such as a central processing unit (CPU) or a graphics processing unit (GPU), or a dedicated processor for a particular process. For example, the dedicated circuit is a field-programmable gate array (FPGA) or an application specific integrated circuit (ASIC). The controller 11 executes processes about the operation of the information processing device 10, while controlling parts of the information processing device 10.

The storage unit 12 includes at least one semiconductor memory, at least one magnetic memory, at least one optical memory, or a combination of at least two kinds of these. For example, the semiconductor memory is a random access memory (RAM) or a read only memory (ROM). For example, the RAM is a static random access memory (SRAM) or a dynamic random access memory (DRAM). For example, the ROM is an electrically erasable programmable read only memory (EEPROM). For example, the storage unit 12 functions as a main storage device, an auxiliary storage device, or a cache memory. The storage unit 12 stores data that is used for the operation of the information processing device 10 and data that is obtained by the operation of the information processing device 10. Specifically, for example, the storage unit 12 stores a voice recognition engine. The voice recognition engine has a function to convert a voice input into text data, and plays a role in analyzing the speech of the user and generating text information corresponding to the speech. Further, for example, the storage unit 12 stores an error correction table. The error correction table is a table for converting an error pattern in the text recognized by the voice recognition engine, into a correction pattern. For example, "RAV4 (R)", which is a vehicle kind name, can be recognized as "LOVEfour" or the like that is an error pattern, by the voice recognition engine. For example, the error correction table includes information in which "LOVEfour" as the error pattern and "RAV4 (R)" as the correction pattern are associated. By referring to the error correction table, proper nouns, such as vehicle kind names and function names, are appropriately corrected.

The input unit 13 includes at least one input interface. Examples of the input interface include a physical key, an electrostatic capacitance key, a pointing device, and a touch screen that is provided integrally with a display. Further, the input interface may be a sound sensor that accepts a voice input, or a camera that accepts a gesture input, for example. The input unit 13 accepts a manipulation for inputting data that is used for the operation of the information processing device 10. The input unit 13 may be connected to the information processing device 10, as an external input apparatus, instead of being included in the information processing device 10. As the connection method, for example, an arbitrary method, such as Universal Serial Bus (USB), High-Definition Multimedia Interface (HDMI (R)), or Bluetooth (R), can be used.

The output unit 14 includes at least one output interface. Examples of the output interface include a display that outputs information as a picture and a speaker that outputs information as a voice. Examples of the display include a liquid crystal display (LCD) and an organic electroluminescence (EL) display. The output unit 14 outputs data that is obtained by the operation of the information processing device 10. The output unit 14 may be connected to the information processing device 10, as an external output apparatus, instead of being included in the information processing device 10. As the connection method, for example, an arbitrary method, such as USB, HDMI (R), or Bluetooth (R), can be used.

The communication unit 15 includes at least one exterior communication interface. The communication interface may be an interface for wire communication or may be an interface for wireless communication. In the case of wire communication, examples of the communication interface include a Local Area Network (LAN) interface and a Universal Serial Bus (USB) interface. In the case of wireless communication, examples of the communication interface include an interface that complies with a mobile communication standard, such as, Long Term Evolution (LTE), 4th generation (4G) or 5th generation (5G), and an interface that complies with a short-range wireless communication, such as Bluetooth (R). The communication unit 15 receives data that is used for the operation of the information processing device 10, and sends data that is obtained by the operation of the information processing device 10.

Functions of the information processing device 10 are realized by executing a program according to the embodiment by a processor corresponding to the controller 11. That is, the functions of the information processing device 10 are realized by software. The program causes a computer to function as the information processing device 10, by causing the computer to execute the operation of the information processing device 10. That is, the computer functions as the information processing device 10, by executing the operation of the information processing device 10 in accordance with the program.

In the embodiment, the program can be recorded in a computer-readable recording medium. The computer-readable recording medium includes a non-transitory computer-readable medium, and for example, is a magnetic recording device, an optical disc, a magneto-optical recording medium, or a semiconductor memory. For example, the distribution of the program is performed by sale, transfer, or lending of a portable recording medium in which the program is recorded, as exemplified by a digital versatile disc (DVD) or a compact disc read only memory (CD-ROM). Further, the distribution of the program may be performed by storing the program in a storage of an external server and sending the program from the external server to another computer. Further, the program may be provided as a program product.

Some or all of the functions of the information processing device 10 may be realized by a dedicated circuit corresponding to the controller 11. That is, some or all of the functions of the information processing device 10 may be realized by hardware.

### Configuration of Terminal Device 20

As shown in FIG. 1, the terminal device 20 includes a controller 21, a storage unit 22, an input unit 23, an output unit 24, and a communication unit 25.

The controller 21 includes at least one processor, at least one dedicated circuit, or a combination of these. The processor is a general-purpose processor, such as a central processing unit (CPU) or a graphics processing unit (GPU), or a dedicated processor for a particular process. For example, the dedicated circuit is a field-programmable gate array (FPGA) or an application specific integrated circuit (ASIC). The controller 21 executes processes about the operation of the terminal device 20, while controlling parts of the terminal device 20.

The storage unit 22 includes at least one semiconductor memory, at least one magnetic memory, at least one optical memory, or a combination of at least two kinds of these. For example, the semiconductor memory is a random access memory (RAM) or a read only memory (ROM). For example, the RAM is a static random access memory (SRAM) or a dynamic random access memory (DRAM). For example, the ROM is an electrically erasable programmable read only memory (EEPROM). For example, the storage unit 22 functions as a main storage device, an auxiliary storage device, or a cache memory. The storage unit 22 stores data that is used for the operation of the terminal device 20 and data that is obtained by the operation of the terminal device 20.

The input unit 23 includes at least one input interface. Examples of the input interface include a physical key, an electrostatic capacitance key, a pointing device, and a touch screen that is provided integrally with a display. Further, the input interface may be a sound sensor that accepts a voice input, or a camera that accepts a gesture input, for example. The input unit 23 accepts a manipulation for inputting data that is used for the operation of the terminal device 20. The input unit 23 may be connected to the terminal device 20, as an external input apparatus, instead of being included in the terminal device 20. As the connection method, for example, an arbitrary method, such as Universal Serial Bus (USB), High-Definition Multimedia Interface (HDMI (R)), or Bluetooth (R), can be used.

The output unit 24 includes at least one output interface. Examples of the output interface include a display that outputs information as a picture and a speaker that outputs information as a voice. Examples of the display include a liquid crystal display (LCD) and an organic electroluminescence (EL) display. The output unit 24 outputs data that is obtained by the operation of the terminal device 20. The output unit 24 may be connected to the terminal device 20, as an external output apparatus, instead of being included in the terminal device 20. As the connection method, for example, an arbitrary method, such as USB, HDMI (R), or Bluetooth (R), can be used.

The communication unit 25 includes at least one exterior communication interface. The communication interface may be an interface for wire communication or may be an interface for wireless communication. In the case of wire communication, examples of the communication interface include a Local Area Network (LAN) interface and a Universal Serial Bus (USB) interface. In the case of wireless communication, examples of the communication interface include an interface that complies with a mobile communication standard, such as, Long Term Evolution (LTE), 4th generation (4G) or 5th generation (5G), and an interface that complies with a short-range wireless communication, such as Bluetooth (R). The communication unit 25 receives data that is used for the operation of the terminal device 20, and sends data that is obtained by the operation of the terminal device 20.

Functions of the terminal device 20 are realized by executing a program according to the embodiment by a processor corresponding to the controller 21. That is, the functions of the terminal device 20 are realized by software. The program causes a computer to function as the terminal device 20, by causing the computer to execute the operation of the terminal device 20. That is, the computer functions as the terminal device 20, by executing the operation of the terminal device 20 in accordance with the program.

Some or all of the functions of the terminal device 20 may be realized by a dedicated circuit corresponding to the controller 21. That is, some or all of the functions of the terminal device 20 may be realized by hardware.

### Operation of Information Processing Device 10

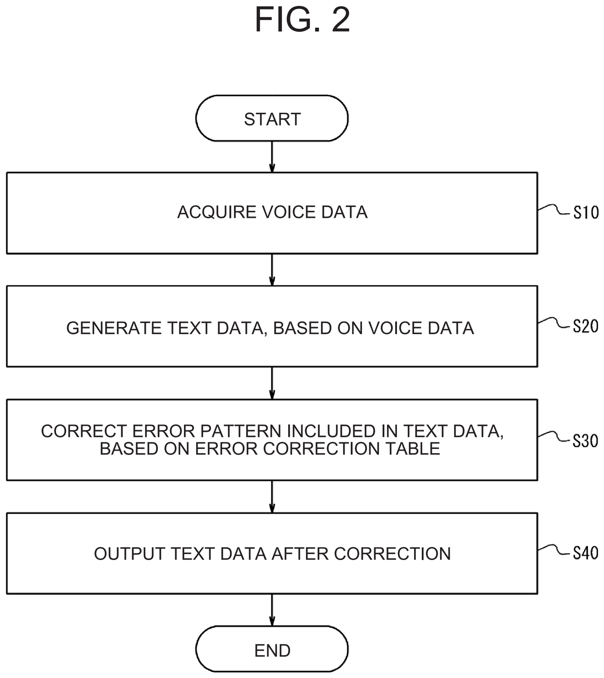

The operation of the information processing device 10 according to the embodiment will be descried with reference to FIG. 2. An example in which the voice data is data about the voice in a business talk relevant to vehicle sales will be mainly described.

Step S10: The controller 11 of the information processing device 10 acquires the voice data.

In the process of acquiring the voice data, an arbitrary technique can be employed. For example, the controller 11 may acquire the voice data from an external device including the terminal device 20, through the communication unit 15 and the network 30. Further, for example, the controller 11 may acquire the voice data through the input unit 13.

S20: The controller 11 generates the text data based on the voice data acquired in step S10.

In the process of generating the text data based on the voice data, an arbitrary technique can be employed. For example, the controller 11 may generate the text data corresponding to the voice data, by inputting the voice data to the voice recognition engine.

S30: The controller 11 corrects the error pattern included in the text data, based on the error correction table. For example, the controller 11 extracts, from the text data, all patterns of words, phases, and others that coincide with error patterns in the error correction table. Then, the controller 11 changes the extracted patterns to correction patterns, based on correction patterns corresponding to error patterns in the error correction table.

S40: The controller 11 outputs the text data after the correction.

In the process of outputting the text information, an arbitrary technique can be employed. For example, the controller 11 may send the data to the terminal device 20 through the communication unit 15, and the output unit 24 of the terminal device 20 may output the text data through a user interface that performs display output. Alternatively, the controller 11 may cause the output unit 14 to output the text data through a user interface that performs display output.

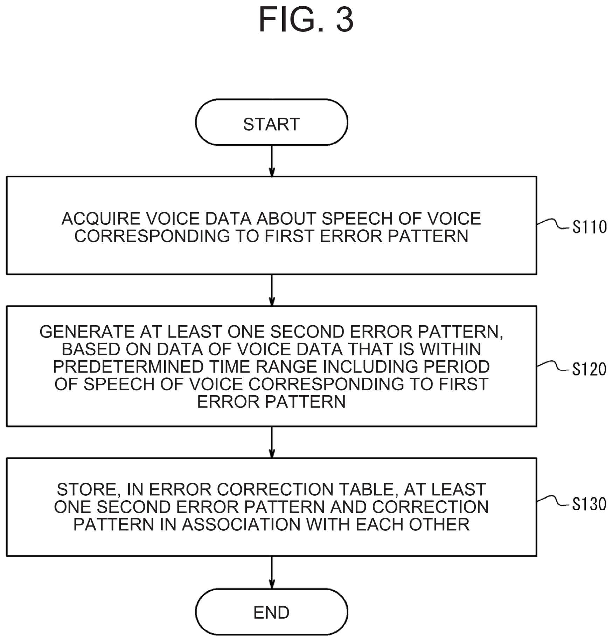

The error correction table includes the first error pattern, at least one second error pattern generated based on the voice data in which the first error pattern is generated, and the correction pattern corresponding to the first error pattern and the at least one second error pattern. An example of the operation relevant to the generation of the error correction table in the information processing device 10 according to the embodiment will be described with reference to FIG. 3.

S110: The controller 11 of the information processing device 10 acquires the voice data about the speech of the voice corresponding to the first error pattern. Specifically, for example, suppose that the first error pattern is "LOVEfour". In this case, the voice data corresponding to the first error pattern is data about the speech of "RAV4 (R)", which is a vehicle kind name. For example, the controller 11 may specify the voice data about the speech of the voice corresponding to the first error pattern, by referring to the error correction table, and may acquire the specified voice data.

In the process of acquiring the voice data in S110, an arbitrary technique can be employed. For example, the controller 11 may acquire the voice data from an external device including the terminal device 20, through the communication unit 15 and the network 30. Further, for example, the controller 11 may acquire the voice data through the input unit 13.

S120: The controller 11 generates at least one second error pattern, based on data (also referred to as target data) of the voice data that is within a predetermined time range including the period of the speech of the voice corresponding to the first error pattern. For example, the predetermined time may be 10 seconds. That is, the target data may be voice data in a period including 10 seconds before the period of the speech of the voice corresponding to the first error pattern and 10 seconds after the period of the speech of the voice corresponding to the first error pattern. A later-described process is performed such that periods before and after the period of the speech of the voice corresponding to the first error pattern is included, and thereby, context and contextual information can be also acquired. For example, in the case where the first error pattern is "LOVEfour", the second error pattern may include "LAB4", "LAVE4", "RAB4", "REV4", "RAF4", "RAP4", "LAB4", and the like.

In the process of generating at least one second error pattern, an arbitrary process can be employed. For example, the at least one second error pattern may be generated by inputting, to the voice recognition engine, processed data resulting from processing the target data. The processed data may be data resulting from processing the target data by at least one process of a noise addition process, a noise removal process, a frequency change process, and a sound volume change process. In this way, the controller 11 may generate the at least one second error pattern by inputting, to the voice recognition engine, the processed data resulting from processing the target data. By using the processed data, the variation of the error pattern can be increased. Therefore, there is a high possibility that the text data having an error can be corrected by the error correction table.

Further, for example, the at least one second error pattern may be generated by inputting the target data to a voice recognition engine for which parameter adjustment has been performed. For example, the parameter may include thresholds relevant to recognition accuracy and reliability, a parameter relevant to a language model, a parameter relevant to an acoustic model, and a parameter relevant to a custom dictionary. In this way, the controller 11 may generate the at least one second error pattern, by inputting the target data to the voice recognition engine for which parameter adjustment has been performed, without processing the target data. The variation of the error pattern can be increased also by the adjustment of the parameter of the voice recognition engine. Therefore, there is a high possibility that the text data having an error can be corrected by the error correction table.

S130: The controller 11 stores, in the error correction table, the at least one second error pattern generated in S120 and the correction pattern in association with each other. For example, in the case where the second error pattern includes "LAB4", "LAVE4", "RAB4", "REV4", "RAF4", "RAP4", "LAB4", and the like, as described above, these error patterns and the correction pattern "RAV4 (R)" are stored in the error correction table in association with each other.

In this configuration, the information processing device 10 corrects the error pattern included in the text data, based on the error correction table. Particularly, the error correction table includes the first error pattern, at least one second error pattern generated based on the voice data in which the first error pattern is generated, and the correction pattern corresponding to the first error pattern and the at least one second error pattern. The error correction table includes a plurality of different error patterns in this way, and therefore, there is a high possibility that the text data having an error can be corrected. Moreover, the error patterns are efficiently generated based on the voice data, and therefore, the text conversion technology for voice data is improved.

The present disclosure has been described based on the drawings and examples. Note that a person skilled in the art can perform various modifications and alterations based on the present disclosure. Accordingly, it is noted that the modification and the alterations are included in the scope of the present disclosure. For example, functions and others included in constituent units, steps and others can be reallocated such that there is no logical inconsistency, and a plurality of constituent units, steps and others can be combined to one, or can be divided.

For example, in the above-described embodiment, the configuration and operation of the information processing device 10 may be distributed among a plurality of computers that can communicate with each other.

Some embodiments of the present disclosure will be shown below as examples. It is noted that embodiments of the present disclosure are not limited to these.

### Supplement 1

A text conversion method for voice data that is executed by an information processing device, the text conversion method including:
acquiring voice data;
generating text data based on the voice data; and
correcting an error pattern included in the text data, based on an error correction table, wherein the error correction table includes a first error pattern, at least one second error pattern generated based on the voice data in which the first error pattern is generated, and a correction pattern corresponding to the first error pattern and the at least one second error pattern.

### Supplement 2

The text conversion method according to supplement 1, wherein the at least one second error pattern is generated based on target data of the voice data in which the first error pattern is generated, the target data being data within a predetermined time range that includes a period of speech of voice corresponding to the first error pattern.

### Supplement 3

The text conversion method according to supplement 2, wherein the at least one second error pattern is generated by inputting, to a voice recognition engine, processed data resulting from processing the target data.

### Supplement 4

The text conversion method according to supplement 3, wherein the processed data is data resulting from processing the target data by at least one process of a noise addition process, a noise removal process, a frequency change process, and a sound volume change process.

### Supplement 5

The text conversion method according to supplement 2, wherein the at least one second error pattern is generated by inputting the target data to a voice recognition engine for which parameter adjustment has been performed.

### Supplement 6

An information processing device including a controller, the controller being configured to:
acquire voice data;
generate text data based on the voice data; and
correct an error pattern included in the text data, based on an error correction table, wherein the error correction table includes a first error pattern, at least one second error pattern generated based on the voice data in which the first error pattern is generated, and a correction pattern corresponding to the first error pattern and the at least one second error pattern.

### Supplement 7

A program causing a computer to execute:
acquiring voice data;
generating text data based on the voice data; and
correcting an error pattern included in the text data, based on an error correction table, wherein the error correction table includes a first error pattern, at least one second error pattern generated based on the voice data in which the first error pattern is generated, and a correction pattern corresponding to the first error pattern and the at least one second error pattern.

## Claims

1. A text conversion method for voice data that is executed by an information processing device (10), the text conversion method comprising:
acquiring voice data;
generating text data based on the voice data; and
correcting an error pattern included in the text data based on an error correction table, the error correction table including a first error pattern, a correction pattern, and at least one second error pattern, the at least one second pattern being generated based on the voice data in which the first error pattern is generated, the correction pattern corresponding to the first error pattern and the at least one second error pattern.

2. The text conversion method according to claim 1, wherein the at least one second error pattern is generated based on target data of the voice data in which the first error pattern is generated, the target data being data within a predetermined time range that includes a period of speech of voice corresponding to the first error pattern.

3. The text conversion method according to claim 2, wherein the at least one second error pattern is generated by inputting, to a voice recognition engine, processed data resulting from processing the target data.

4. The text conversion method according to claim 3, wherein the processed data is data resulting from processing the target data by at least one process of a noise addition process, a noise removal process, a frequency change process, and a sound volume change process.

5. The text conversion method according to claim 2, wherein the at least one second error pattern is generated by inputting the target data to a voice recognition engine for which parameter adjustment has been performed.

6. An information processing device (10) comprising a controller (11) configured to:
acquire voice data;
generate text data based on the voice data; and
correct an error pattern included in the text data, based on an error correction table, the error correction table including a first error pattern, a correction pattern, and at least one second error pattern, the at least one second error pattern being generated based on the voice data in which the first error pattern is generated, the correction pattern corresponding to the first error pattern and the at least one second error pattern.

7. A non-transitory storage medium storing instructions that are executable by one or more processors and that cause the one or more processors to perform functions comprising:
acquiring voice data;
generating text data based on the voice data; and
correcting an error pattern included in the text data, based on an error correction table, the error correction table including a first error pattern, a correction pattern, and at least one second error pattern, the at least one second error pattern being generated based on the voice data in which the first error pattern is generated, the correction pattern corresponding to the first error pattern and the at least one second error pattern.
